# EUROPEAN PATENT APPLICATION

(11) **EP 0 708 463 A1**
(43) Date of publication of application: **24.04.1996**
(21) Application number: 95500142.5
(22) Date of filing: 19.10.1995
(51) Int. Cl.: H01H 9/02

(54) **Protector for remote control apparatus**

(30) Priority: 21.10.1994 AR 94329847
(71) Applicant: Fernandes Ribeiro, Mario, Capital Federal (AR)
(72) Inventor: Fernandes Ribeiro, Mario, Capital Federal (AR)
(74) Representative: Gomez-Acebo y Pombo, José Miguel

(57) **Abstract**

Protector for remote control apparatus especially for audio and television apparatus, formed by a cover of flexible material which peripherally includes a tubular air chamber.

## Description

This invention is related to a protector against bumps for remote control apparatus of the type used in audio and television equipment.

It is known that said remote control apparatus, which are normally handled by members of the family with different ages, sulTer constant bumps due to falls or because they are stepped on or kicked.

It is then the object of the present invention to avoid the breakages in remote control apparatus due to bumps or falls.

The subject of this invention is a protector against bumps for remote control apparatus of the type used with audio and television apparatus, characterized by comprising a substantially parallepipedic cover, of substantially rectangular basis, the side walls of which are formed by individual air chambers, having one of its basis an opening for the insertion of the remote control apparatus and being one of its basis a transparent one, being said protector made of a flexible material.

The invention will be better understood with reference to the enclosed drawings in which a preferred embodiment thereof is represented. In the drawings:
Figure 1 shows a perspective view of the subject of the invention; and,
Figure 2 shows an AA sectional view of Figure 1.

It is then observed that protector 1, of substantially parallepipedic shape is formed by four air chambers 2, which in this case are tubular and are joined among themselves forming a unique air route without continuity solution along all the perimeter of protector 1. Said unique air chamber 2 is swelled by a valve which is not represented, through which air is insufflated at a pressure greater than the atmospheric one.

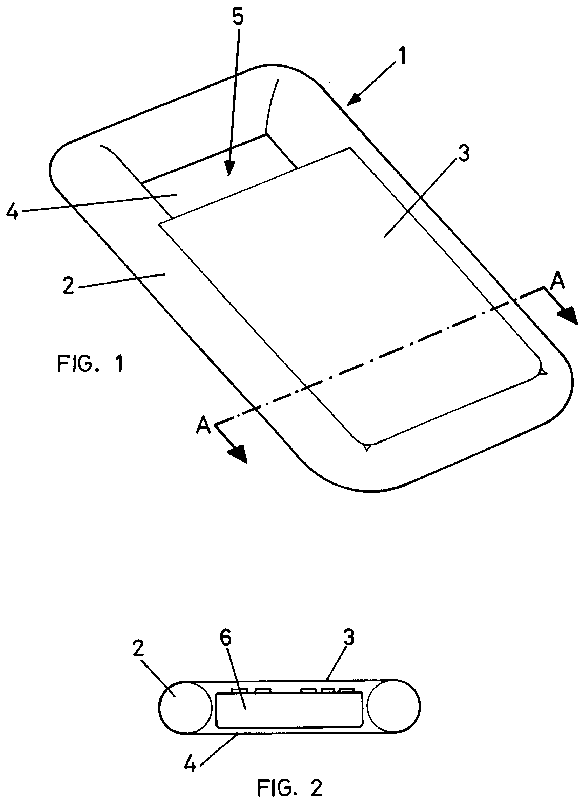

It is clear that the air chambers 2 that form the side walls of the protector 1, can also be independent among themselves. Protector 1, that is the subject of the invention, shows a lower basis 4 that joins the four side faces and an upper basis 3 that presents an opening 5 for the forced insertion of the remote control apparatus 6, which is arranged within protector 1 as shown in Figure 2. Conveniently, at least one of said basis, for instance 3, is transparent so as to visualize the different control buttons of the remote control apparatus.

It is evident that if said remote control apparatus 6 is arranged within protector 1, the air chambers 2 will absorb all the side impacts thus avoiding the breakages of the apparatus. It is worth highlighting that almost all the damages to remote control apparatus are caused by side bumps or falls, and that few times breakages are caused by flat falls.

One of said basis, for instance 3, instead of being transparent may show a relief in Braille writing with the different symbols indicating the controls of the remote control apparatus, this allows blind people to use conventional remote control apparatus and handle at a distance audio or television equipments.

## Claims

1. Protector against bumps for remote control apparatus of the type used with audio and television equipment, comprising a substantially parallepipedic cover, of substantially rectangular basis, and the side walls of which are formed by individual air chambers, having one of its basis an opening for the insertion of the remote control apparatus and being at least one of its basis transparent, being said protector made of a flexible material.

2. Protector against bumps, according to claim 1, wherein said air chambers are tubular.

3. Protector against bumps, according to claims 1 and 2, wherein said air chambers are joined among themselves, forming a unique air route.

4. Protector against bumps, according to claims 1 to 3, wherein one of its basis has Braille code symbols in relief which indicate the different controls of the remote control.
